# EUROPEAN PATENT APPLICATION

(11) **EP 1 309 189 A2**
(43) Date of publication of application: **07.05.2003**
(21) Application number: 02079044.0
(22) Date of filing: 01.10.2002
(51) Int. Cl.: H04N 5/44

(54) **Intelligent TV room**

(30) Priority: 31.10.2001 US 999370
(71) Applicant: Koninklijke Philips Electronics N.V., 5621 BA Eindhoven (NL)
(72) Inventor: Philomin, Vasanth, c/o Inter. Octrooibureau B.V., 5656 AA Eindhoven (NL); Gutta, S. V. R., c/o Inter. Octrooibureau B.V., 5656 AA Eindhoven (NL); Trajkovic, Miroslav, c/o Inter. Octrooibureau B.V., 5656 AA Eindhoven (NL)
(74) Representative: Groenendaal, Antonius Wilhelmus Maria

(57) **Abstract**

The present invention relates to a control system and method for automatically adjusting the viewing condition to enhance the experiences associated with watching a television program. The system includes a unit for deriving a classification of each video signal received therein, a unit for observing a viewer's facial expression, and a unit for processing the output of the observed facial expression to determine whether the observed facial expression is associated with predefined facial expressions stored in a recognition module. Based on the classification and/or if there is a match between the observed facial expression with the at least one of the predefined facial expressions, the electrical power supplied to any one of electrical devices provided in the room is varied according to predetermined criteria.

## Description

The present invention relates to television systems and, more particularly, to a television control system and method for adjusting the viewing conditions in response to the contents of television programs and/or the emotional state of a television viewer.

In general, television systems have improved dramatically in the past decade. Numerous types of television systems with various interactive capabilities have been developed in the prior art. Although many prior art systems serve the general purpose of providing visual and audio signals to television viewers, they would not be as suitable for the purpose of the present invention as described hereinafter.

The present invention relates to a control system and method for automatically adjusting the room condition to enhance the viewing experience when watching a television or other entertainment program.

An aspect of the present invention provides a system for adjusting the viewing condition and includes a means for observing the facial expression of a television viewer; a means for processing an output of the observed facial expression to determine whether it is associated with predefined facial expressions stored in a storage medium; and, a means for adjusting electrical power selectively to any one of the electrical devices electrically coupled to the processing means if there is a match between at least one facial expression with the predefined facial expressions. The predefined facial expressions include recognizing emotional states of a plurality of people when they are happy, sad, angry, afraid, disgusted, or surprised.

Another aspect of the present invention further provides a system capable of adjusting the viewing condition and includes a means for detecting moving objects and sound from a stream of video signals received therein; a means for processing each moving object and sound of the received video signals according to a classification method; a means for deriving a classification for each moving object and sound based on the classification method; and, a means for adjusting electrical power selectively to any one of electrical devices electrically coupled to the processing means based on the derived classification. The detection means receive the stream of video signals from a plurality of sources, which include a cable service provider, digital high definition television (HDTV), digital standard definition television (SDTV) signals, a satellite dish, a conventional RF broadcast, an Internet connection, a VHS player, and a DVD player.

Another aspect of the present invention is related to a method for adjusting the viewing condition of an entertainment program. The method includes the steps of: detecting a stream of video signals indicative of the entertainment program; classifying each moving object and sound of the detected video signals according to a classification method; simultaneously observing the facial expression of a person watching the entertainment program; identifying whether the observed facial expression is associated with at least one of a plurality of predetermined facial expressions by comparing the observed facial expression with the plurality of predetermined facial expressions in a pattern recognition module; and, adjusting electrical power selectively to any one of the electrical devices according to predefined criteria based on the classification and/or based on weather the pattern recognition means recognizes at least one facial expression associated with the predetermined facial expressions. The pattern recognition means further comprises recognizing the continuous movement of a facial expression of a particular television viewer for a predetermined amount of time.

A more complete understanding of the method and apparatus of the present invention is available by reference to the following detailed description when taken in conjunction with the accompanying drawings wherein:
FIG. 1 is a simplified diagram illustrating an exemplary room whereto embodiments of the present invention are to be applied;
FIG. 2 illustrates an exemplary TV control system device and a television set according to an embodiment of the present invention;
FIG. 3 is a simplified circuit block diagram showing the television control system according to an embodiment of the present invention;
FIG. 4 is a flowchart providing an overview of the method according to the present invention;
FIG. 5 is a diagram illustrating the pattern recognition function in accordance with the present invention; and,
FIG. 6 is a flow chart providing operation steps of detecting the emotional state of a television viewer according to the present invention.

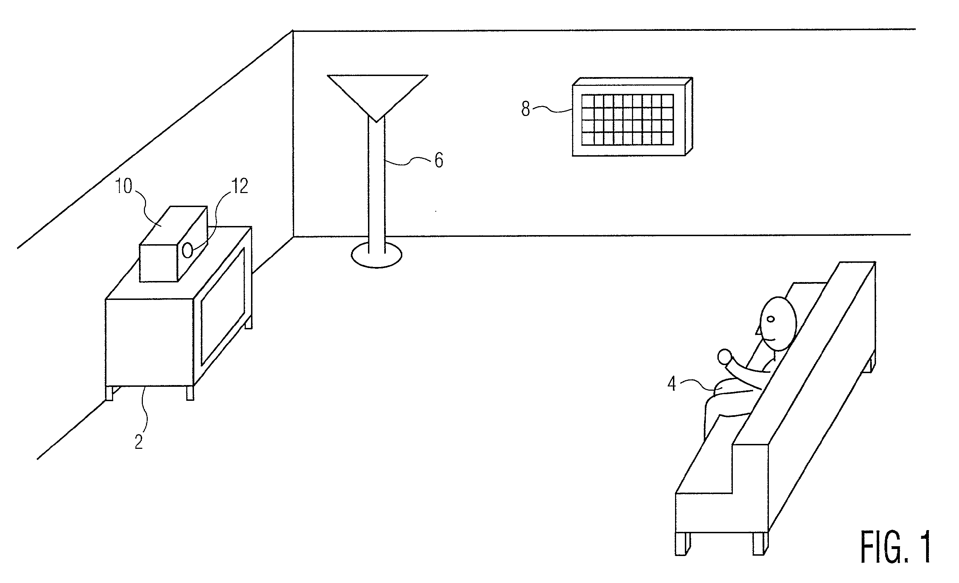

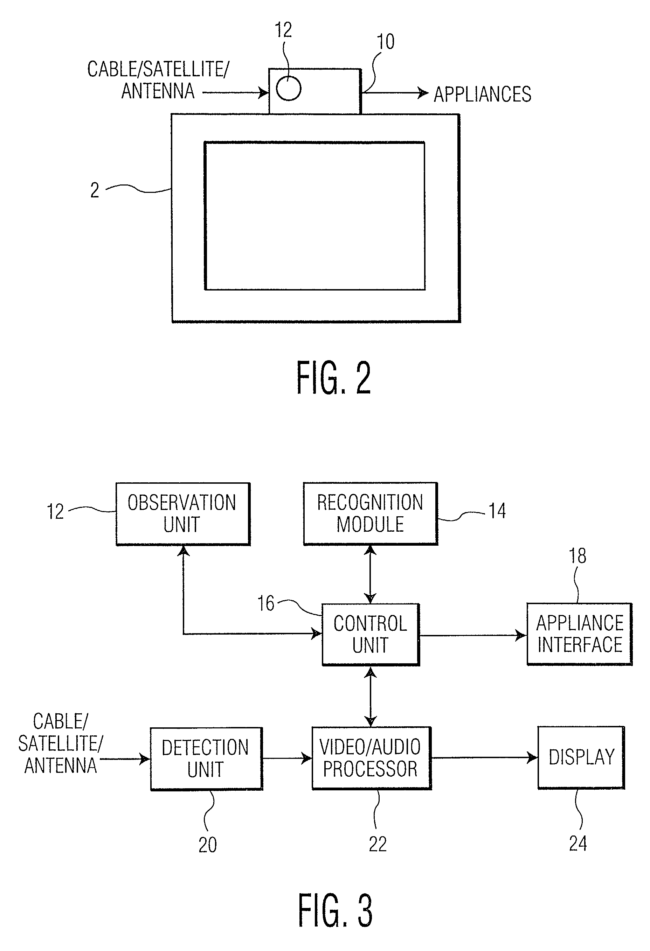

In the following description, for purposes of explanation rather than limitation, specific details are set forth such as the particular architecture, interfaces, techniques, etc., in order to provide a thorough understanding of the present invention. For purposes of simplicity and clarity, detailed descriptions of well-known devices, circuits, and methods are omitted so as not to obscure the description of the present invention with unnecessary detail. FIG. 1 is an illustrative diagram whereto embodiments of the present invention are to be applied. As shown in FIG. 1, a television viewer 4 is sitting in a sofa positioned across the room from the control system 10. As shown in FIG. 2, the control system 10 is adapted to receive a stream of video signals from a variety of sources, including a cable service provider, digital high definition television (HDTV) and/or digital standard definition television (SDTV) signals, a satellite dish, a conventional RF broadcast, an Internet connection, or another storage device, such as a VHS player or DVD player. The control system 10 may be located anywhere to keep a predetermined area or room under surveillance.

During a viewing mode, the control system 10 causes a number of electronic devices, i.e., lamp 6, fan 8, air conditioner/fan 8, etc. to increase/decrease its output power to change the room condition to reflect the experiences provided in the current content of the television program. To this end, the control system 10 detects the incoming video signals and analyzes video and audio signals during a viewing mode, then classifies portions of the program into one of several predetermined categories according to a classification method. In this case, audio and video features, such as the intonation patterns, pitch, intensity, speaking rate, facial expressions, gaze, body postures, etc., would be extracted from the currently playing program. These features are then given to a radial basis function (RBF) classifier (explained later) that has been previously trained to categorize clips into one of several categories, such as suspense, horror, action, romance, drama, etc., then adjusts the room condition to reflect the content of the TV program by adjusting the power output to a number of electronic devices provided in the room. For example, while viewing a romantic program, the lamp 8 is dimmed to provide candle-like intensity.

In addition, the control system 10 is equipped with an observing unit 12 to capture a particular facial expression of the viewer to adjust the room condition via a number of electronic devices that are electrically coupled or in communication with the control system 10. Hence, a variation in lighting intensity or room temperature may be achieved to further enhance the viewing experience based on the facial expressions associated with the emotional states of the viewer.

FIG. 3 is a simplified block diagram of the TV control system 10 according to an exemplary embodiment of the present system. The control system 10 includes an observation unit 12, a recognition module 14, a control unit 16, an appliance interface 18, a detection unit 20, a video/audio processor 22, and a display 24. The term "control unit" as used herein is intended to include a microprocessor, central processing unit (CPU), microcontroller, digital signal processor (DSP) or any other data processing element that may be utilized in a given data processing device. Moreover, in other embodiments of the invention, some or all of the functions of the control unit 16, recognition module 14, processor 22 and/or other elements of the system 10 may be combined into a single device. For example, one or more of the elements of system 10 may be implemented as an application specific integrated circuit (ASIC) or circuit card to be incorporated into a computer, television, set-top box, or other processing device.

In operation, the TV control system 10 first obtains an image signal received via the detection unit 20, which is configured to receive audio/video programming signals in analog, digital, or digitally compressed formats via any transmission means, including satellite, cable, wire, and television broadcast. The image signal received by the detection unit 20 is converted into digital signals. The video/audio processor 22 processes the converted digital signals and presents the processed data signals to the display unit 24 for viewing. At the same time, the video/audio processor 22 extracts the intonation patterns, pitch, intensity, speaking rate, facial expression, gaze, body postures, etc., from the currently displaying program. Detecting these features is well known in the art that can be performed in a variety of ways. See for example, U.S. Patent Ser. No.: 09/705,666 filed on November 30, 2000, the content of which is hereby incorporated by reference. The extracted features are then categorized into various classification groups using a radial basis function (RBF) classifier (explained later). Once the category is determined, the current mood of the program can be accentuated by controlling devices in the room to reflect the mood of the particular television program. That is, the color and intensity of the room lights may be adjusted at certain points during the presentation, thus enhancing visual effects simulating the experience associated with the particular program segment. For example, a thunderstorm scene in a movie could cause lights in the room to flash in a sequence or may make the sound louder.

Meanwhile, the emotion of the viewer can be monitored to change the viewing condition in accordance with the embodiment of the present invention. To this end, the observation unit 12 is provided to capture the emotional state of the viewer on the assumption that certain distinct facial expressions associated with emotional states, such as happiness, sadness, disgust, anger, surprise, and fear are common to most people regardless of their race and culture. For example, exposing the teeth represents a happy state. The observation unit 12 may be an optical sensor, sound sensor, a video camera - namely a mechanical pan-tilt-zoom (PTZ) camera, a wide-angle electronic zoom camera, or any other suitable image capturing device. Therefore it should be understood that the term "observation unit" as used herein is intended to include any type of image capturing device or any configuration of such multiple devices.

The observation unit 12 communicates with the control unit 16, which analyzes data from the observation unit 12 to determine whether any behavior patterns observed by the observation unit are associated with a predetermined facial expression stored in the pattern recognition module 14. The facial expressions stored in the recognition module 14 can include happiness, sadness, anger, fear, disgust, surprise, and other facial expressions that are consistent across most people. If there is a match recognized by the pattern recognition module 14 between the observed behavior and one of the predetermined facial expressions, the control unit 16 generates a control signal to the appliance interface 18 to adjust, for example, the sound of the show to become louder or softer.

Now, the provision of a mood classification to adjust the viewing condition according to the present invention will be explained in a detailed description.

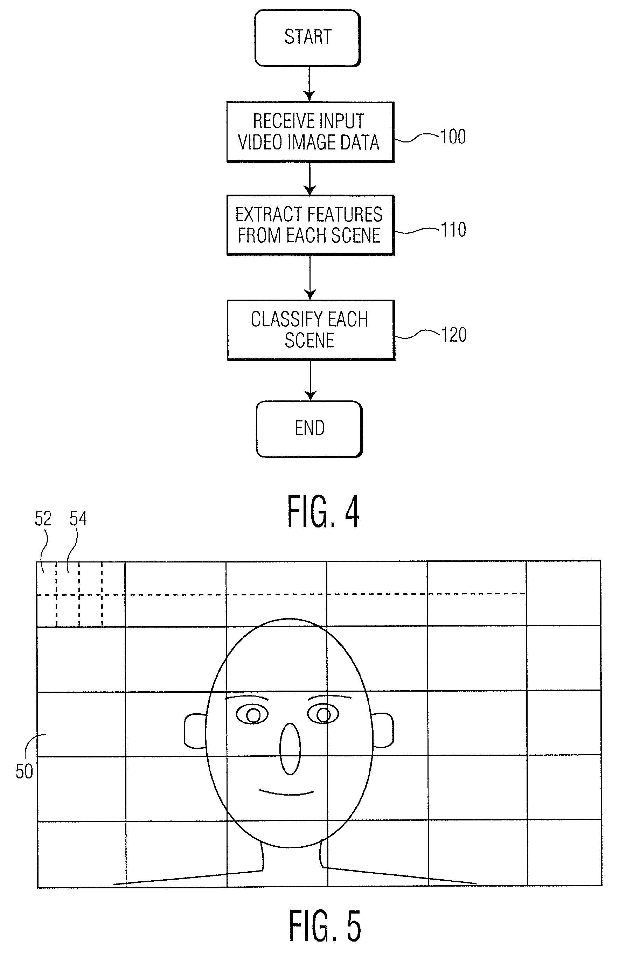

FIG. 4 is a flowchart providing an overview of the classification method of the present invention. In step 100, the control unit 10 receives input video signals, then video signals are analyzed to detect moving objects and audio sounds, including intonation patterns, pitch, intensity, speaking rate, facial expression, gaze, color information, body postures, etc., in step 110. In step 120, each scene is classified into a plurality of different groups, such that the viewing condition can be adjusted according to the type of classification. Those skilled in the art will appreciate that any other method, now known or later developed for detecting moving objects and audio sounds in video image data to classify each scene into different groups, also can be utilized in the methods of the present invention, such as methods that use the radial basis function (RBF) classifier as a way to classify them into different groups. An example of such method is disclosed in prior U.S. Application Ser. No. 09/494,443, filed on February 27, 2001, under the name of the same assignee of this application, which is hereby incorporated by reference.

Briefly, the classification method utilizing the Radial Basis Function (RBF) involves training and classifying at least one of the detected moving objects. Each of the x-gradient, y-gradient, and x-y-gradient images is used by the RBF classifier for classification. The control system 10 generates a video signal or other sequence of images in the program. The sequence of images detected by the detection unit 20 may be processed, for example, so as to determine a particular expression of the viewer among the images. By modeling and analyzing the appearance and geometry of facial features under different facial expressions for different people, the video/audio processor 22 is able to achieve both face recognition and facial expression recognition. For example, exposing the teeth in a smile would classify the scene as a comedy. In addition, other types of motion and/or sound exhibited by the objects from each of the extracted features in the scene can be used to classify them into different groups. The classification method 100 of the present invention is particularly suited for a computer software program, such computer software program preferably containing modules corresponding to the individual steps of the method. Such software of course can be embodied in a computer-readable medium, such as an integrated chip or a peripheral device.

It will be appreciated by those skilled in the art that any probabilistic/stochastic methods for classification can be used in the disclosed methods without departing from the scope or spirit of the present invention. Furthermore, the features used in the RBF models described herein are gradients of the image data, which are described by way of example only and not to limit the scope of the invention. Those skilled in the art will appreciate that other features also may be used in addition to other types of gradients. For example, the classification method may be performed using a well-known electronic program guide (EPG) protocol. An EPG is a standard application designed to aid the viewer in the navigation of and selection from broadcast materials available in a digital TV environment. Basically, an EPG is an interactive, on-screen display feature that displays information analogous to television listings found in local newspapers or TV guides or EPG services like a tribune. The EPG provides information about each program and includes programming characteristics, such as the channel number, program title, start time, end time, elapsed time, time remaining, rating (if available), topic, theme, and a brief description of the program's content. Using the EPG features, the classification of an incoming program can be performed to generate a control signal for adjusting the viewing condition of a particular program.

FIG. 5 illustrates the technique of detecting the emotional state of a viewer in a room based on a series of frame data generated by the observation unit 12 of the control system 10 to adjust the condition of the room. Tracking the facial expression of a person in a particular area is well known in the art and can be performed in a variety of ways. See for example, U.S. Patent Nos. 4,249,207 and 6,095,989, the contents of which are hereby incorporated by reference. When using a video camera, for example, the area under surveillance could be divided into an array of cells as shown in FIG. 5. The video camera may be adjusted such that the head of the viewer comes within the field of view of the video camera. The content of each cell is monitored between frames for any changes in the adjacent cells, and such indication can be used to indicate the movement or non-movement of a certain region of the person's face. The array of cells could be further subdivided (shown by 52 and 54), for example, near the contour of the eye region or the mouth. The width of the subdivided cells also could be smaller, such that any facial movement can be more easily identified.

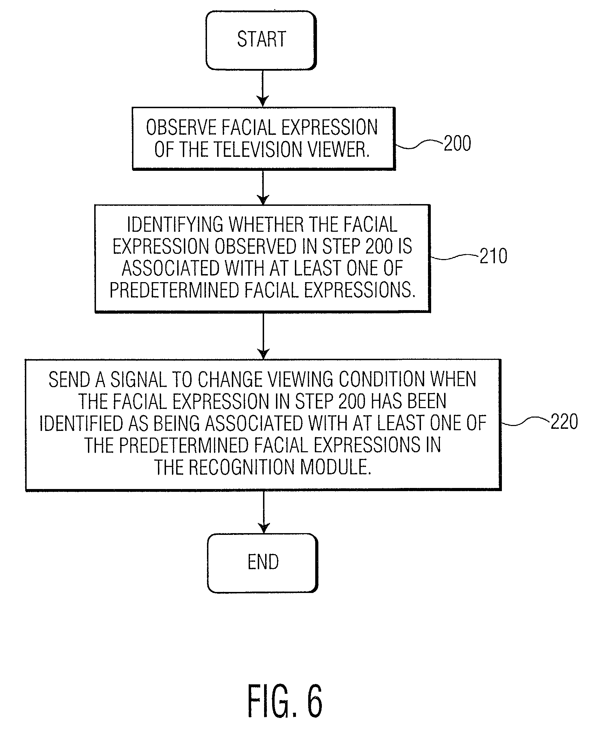

FIG. 6 provides an overview of a method for adjusting the room condition to reflect the content of a particular program according to the present invention. Step 200 observes the facial expression of a person watching the television program using the technique described in the preceding paragraphs. Step 210 identifies whether the behavior observed in step 200 is associated with at least one of a plurality of predetermined facial expressions, by comparing the behavior observed with a plurality of facial patterns in the pattern recognition module 14. The plurality of the facial expressions stored in the pattern recognition module could be images as well as motion. The facial expressions stored in the recognition module 14 can include happiness, sadness, anger, fear, disgust, surprise, and other facial expressions that are consistent across peoples. For example, a smiling face or the motion of a smiling face (as previously discussed) exposing teeth could be the criteria contained in the pattern recognition module. In step 220, the control unit 16 sends a control signal to the appliance interface 18 when the facial expression observed is recognized by the pattern recognition module as corresponding to a pattern in storage. As a result, the viewing condition of the room may be adjusted. For example, if the recognized facial expression indicates fear, the sound of the program may become louder by increasing the volume of the stereo system coupled to the control system 10.

While the preferred embodiments of the present invention have been illustrated and described, it will be understood by those skilled in the art that various changes and modifications may be made, and equivalents may be substituted for elements thereof, without departing from the true scope of the present invention. In addition, many modifications may be made to adapt to a particular situation and the teaching of the present invention without departing from the central scope. Therefore, it is intended that the present invention not be limited to the particular embodiment disclosed as the best mode contemplated for carrying out the present invention, but that the present invention include all embodiments falling within the scope of the appended claims.

## Claims

1. A system for enhancing the viewing experience, comprising:
means for observing (12) the facial expression of a viewer in a predetermined area under surveillance;
means for processing (16) the output of an observed facial expression from said observing means (12), said processing means including a pattern recognition means (14) for recognizing whether said observed facial expression is associated with predefined facial expressions; and,
means for adjusting (18) electrical power selectively to any one of electrical devices electrically coupled to said processing means (16) if said pattern recognition means (14) recognizes at least one facial expression associated with said predefined facial expressions matches said observed facial expression.

2. The system according to Claim 1, wherein said observing means (12) includes cameras.

3. The system according to Claim 1, wherein said predefined facial expressions recognized by said pattern recognition means (14) include recognizing emotional states of a plurality of people when they are happy, sad, angry, afraid, disgusted, or surprised.

4. The system according to Claim 1, wherein said pattern recognition means (14) further comprises recognizing the continuous movement of a facial expression of said particular viewer for a predetermined amount of time.

5. A system for enhancing the viewing experience, comprising:
means (20) for detecting moving objects and sound from a stream of video signals received therein;
means (16) for processing each moving object and sound of said received video signals according to a classification method;
means (22) for deriving a classification for each moving object and sound based on said classification method; and,
means (18) for adjusting electrical power to any one of electrical devices electrically coupled to said processing means (16) based on said derived classification.

6. The system according to Claim 5, further comprising a means (24) for displaying said video signals for viewing.

7. The system according to Claim 5, wherein said detection means (20) receive said stream of video signals from a plurality of sources, which include a cable service provider, digital high definition television (HDTV), digital standard definition television (SDTV) signals, a satellite dish, a conventional RF broadcast, an Internet connection, a VHS player, and a DVD player.

8. The system according to Claim 5, wherein said detection means (20) comprises a means for converting said stream of video signals into digital signals.

9. A system for enhancing the viewing experience, comprising:
means (12) for observing the facial expression of a viewer in a predetermined area under surveillance;
means (20) for detecting moving objects and sound from a stream of video signals received therein;
means (16) for processing the output of an observed facial expression from said observing means (12), said processing means (16) including a pattern recognition means (14) for recognizing whether said observed facial expression is associated with predefined facial expressions;
means (22) for deriving a classification for each moving object and sound of said received video signals according to a classification method; and,
means (18) for adjusting electrical power to any one of electrical devices electrically coupled to said processing means (16) in response to said derived classification.

10. The system according to Claim 9, wherein said adjusting means (18) adjust the electrical power selectively to any one of electrical devices electrically coupled to said processing means (16) if said pattern recognition means (14) recognizes at least one facial expression associated with said set of predefined facial expressions matches said observed facial expression.

11. The system according to Claim 9, wherein said observing means (12) includes cameras.

12. The system according to Claim 9, wherein said predefined facial expressions recognized by said pattern recognition means include recognizing emotional states of a plurality of people when they are happy, sad, angry, afraid, disgusted, or surprised.

13. The system according to Claim 9, wherein said pattern recognition means (14) further comprises recognizing the continuous movement of a facial expression of said particular viewer for a predetermined amount of time.

14. The system according to Claim 9, wherein said detection means (20) receives said stream of video signals from a plurality of sources, which include a cable service provider, digital high definition television (HDTV), digital standard definition television (SDTV) signals, a satellite dish, a conventional RF broadcast, an Internet connection, a VHS player, and a DVD player.

15. The system according to Claim 9, wherein said detection means (20) comprises a means for converting said stream of video signals into digital signals.

16. A method for enhancing the viewing experiences of an entertainment program, the method comprising the steps of:
(a) observing the facial expression of a viewer in a predetermined area under surveillance;
(b) identifying whether the facial expression observed in step (a) is associated with at least one of a plurality of predetermined facial expressions by comparing the behavior observed with the plurality of said predetermined facial expressions in a pattern recognition module (14); and,
(c) adjusting electrical power selectively to any one of electrical devices according to predefined criteria if said pattern recognition means (14) recognizes at least one facial expression associated with said predetermined facial expressions.

17. A method for enhancing the viewing experience of an entertainment program, the method comprising the steps of:
detecting a stream of video signals indicative of said entertainment program;
classifying each moving object and sound of said detected video signals according to a classification method;
simultaneously observing the facial expression of a viewer watching said entertainment program;
identifying whether said observed facial expression is associated with at least one of a plurality of predetermined facial expressions by comparing said observed facial expression with the plurality of said predetermined facial expressions in a pattern recognition module (14); and,
adjusting electrical power selectively to any one of electrical devices according to predefined criteria if said pattern recognition means (14) recognizes at least one facial expression associated with said predetermined facial expressions.
